# EUROPÄISCHE PATENTSCHRIFT

(11) **EP 2 639 909 B1**
(45) Veröffentlichungstag und Bekanntmachung des Hinweises auf die Patenterteilung: **22.01.2020**
(21) Anmeldenummer: 13158538.2
(22) Anmeldetag: 11.03.2013
(51) Int. Cl.: H02G 3/06, H02G 3/04

(54) **Kabelkanalsystem**
Cable conduit system
Système de caniveaux de câbles

(30) Priorität: 12.03.2012 DE 202012100866 U
(43) Veröffentlichungstag der Anmeldung: 18.09.2013
(73) Patentinhaber: OBO Bettermann Produktion Deutschland GmbH & Co.KG, 58710 Menden (DE)
(72) Erfinder: Seidel, Bernd, 08209 Auerbach (DE); Künzel, Werner, 95111 Rehau (DE); Christ, Michael, 95028 Hof (DE); Friedrich, Jochen, 95119 Naila (DE); Salzhuber, Frank, 90419 Nürnberg (DE); Engelbrecht, Bernd Jürgen, 90763 Fürth (DE)
(74) Vertreter: Haverkamp, Jens

(56) Entgegenhaltungen:
- DE-U1-202004 005 987
- DE-U1-202007 009 424
- DE-U1-202010 015 292

## Beschreibung

Die Erfindung betrifft ein Kabelkanalsystem umfassend Kabelkanalelemente, welche mittels wenigstens einem Kupplungselement in ihrer Längsrichtung aneinander fügbar sind, wobei die Kabelkanalelemente aus einem etwa U-förmigen Kanalunterteil sowie insbesondere einer daran anordenbaren Abdeckung bestehen, wobei das Kupplungselement lösbar und / oder verschiebbar in die freien Endbereiche der Kabelkanalelemente einsetzbar ist, wobei das an den Endbereichen eines Kabelkanalelementes an mindestens einer der Seitenwand geführte Kupplungselement wenigstens zwei Federsysteme aufweist.

Derartige Kabelkanalsysteme sind in den einschlägigen Branchen allgemein bekannt und haben sich seit Jahren bewährt. Die Kabelkanalsysteme sind je nach Einsatzbedingungen als Kunststoffteile, hergestellt im Extrusions- bzw. Koextrusionsverfahren, als Aluminiumstrangpressteile oder auch als gekantete oder rollierte Metallblechprofile lieferbar.
Dabei werden die Kabelkanalelemente in festen definierten Längen geliefert, so dass bei der Verlegung bzw. der Montage von längeren Kabelkanalsystemen mehrere einzelne Kabelkanalelemente an ihren Stirnseiten zusammengesetzt werden müssen, so dass der Bereich des Aneinanderfügens der einzelnen Kabelkanalelemente ein Problem dahingehend sein kann, dass bei der stirnseitigen Montage möglichst kein Versatz bzw. kein Spalt zwischen den einzelnen Kabelkanalelementen eintreten darf.

Für die Umsetzung derartiger stirnseitiger Montage von einzelnen Kabelkanalelementen sind aus dem Stand der Technik verschiedene Lösungen bekannt.

So wird beispielsweise in der DE 29510836 U1 die Verwendung von Winkelstücken aus Metall zur Verstärkung von im Winkel verlegten Kabelkanalelementen beschrieben, wobei die Verstärkungen in vorgesehenen Taschen in den auf Gehrung geschnittenen Enden der Kabelkanalelemente eingeschoben werden.

Weiterhin wird in der EP 0721243 eine weitere Verbindungsmöglichkeit von zwei stirnseitig zu montierenden Kabelkanalelementen beschrieben. Die Kabelkanalelemente mit einem U-förmigen, einseitig offenem Unterteil mit Boden, zwei Seitenwänden, zwei schmalen, parallel zum Boden verlaufenden Deckleisten mit etwa L-förmigem Querschnitt und zwei an der Innenseite des Bodens angeformten Längsleisten und mit zwei zur Verbindung zweier Kanalabschnitte dienenden Kupplungselementen sind so ausgestaltet, dass das Kupplungselement aus einer Rückenplatte, einer etwa im rechten Winkel abgewinkelten Fußleiste, einer im stumpfen Winkel abgewinkelten Kopfleiste und zwei etwa im rechten Winkel abgewinkelten Stirnleisten besteht und dass etwa im Zentrum der Rückenplatte durch einen dreiseitigen Freischnitt eine Zunge gebildet ist, die auf ihrer Seite eine Nase trägt. Nachteilig bei dieser Verbindungsmöglichkeit wird gesehen, dass bei der stirnseitigen Montage einzelner Kabelkanalelemente die bereits auf einem Kabelkanalelement angeordnete Kupplung durch das zweite zu montierende Kabelkanalelement in den Kanal zurückgeschoben und dieses zusätzliche Kabelkanalelement somit nicht montierbar ist.
Ein weiterer Nachteil wird darin gesehen, dass die beschriebenen Kupplungselemente jeweils nur für eine definierte Geometrie von Kabelkanalelementen einsetzbar sind, was die Herstellungskosten und die Lagerhaltungskosten dieser Lösung erhöht.
Weiterhin nachteilig wird gesehen, dass diese Kupplungselemente immer nur an einer Seitenwand des Kabelkanalelementes einsetzbar sind, was die Lagerhaltungskosten erhöht und bei der Montage zu Verwechslungen führen kann.

In der EP 1061623 wird eine andere Verbindungsmöglichkeit von zwei stirnseitig zu montierenden Kabelkanalelementen beschrieben. Bei diesen Kabelkanalelementen wird ein verschieblich einklemmbares Kupplungselement beschrieben, das in Höhenrichtung federnd ausgebildet sein soll und an seiner dem Kanalboden zugewandten Unterkante einen Rastnocken aufweist.

Die DE 20 2004 005 987 U1 beschreibt ein Kabelkanalsystem aus mindestens zwei Kabelkanalelementen, die durch separate Verbindungselemente in ihrer Längsrichtung aneinander fügbar sind, wobei die Kabelkanalelemente aus einem annähernd U-förmigen Kanalunterteil sowie einer vorzugsweise aufrastbaren Abdeckung bestehen und das Verbindungselement lösbar und / oder verschiebbar in die freien Endbereiche der Kanalkanalelemente einsetzbar ist, wobei an den Endbereichen eines Kabelkanalelements an mindestens einer der beiden Seitenwände ein Kupplungselement geführt ist, das wenigstens zwei Federelemente aufweist.

Darüber hinaus geht aus der DE 20 2007 009 424 U1 ein Leitungsführungskanale aus Metall mit einer Erdungskupplung hervor, wobei die Erdungskupplung ein Deckenelement, ein zur Kanalaußenwand angeordnetes Seitenelement, ein zur Kanalmitte angeordnetes Seitenprofil, sowie Kontaktspitzen zur elektrischen Kontaktierung des Kanalunterteils, wobei an dem Seitenelement durch einen dreiseitigen Freischnitt wenigstens eine Zunge ausgebildet ist, an dem Seitenprofil ein U-förmiges Halteprofil ausgebildet ist und die Kontaktspitzen an dem Seitenprofil ausgebildet sind, so dass diese im eingesetzten Zustand der Erdungskupplung mit dem Kanalunterteil einen elektrischen Potentialausgleich bewirken.

Aus der DE 20 2010 015 292 U1 geht ein aus Kabelkanalabschnitten zusammengesetzter Kabalkanal hervor, wobei zwei aufeinander stoßende Kabelkanalabschnitte durch ein Kupplungselement mit Erdungsfunktion verbunden sind, das aus einer in etwa rechteckförmigen Grundplatte mit wenigstens einer an deren Stirnseite ausgebildeten Erdungsfahne, sowie einem mit einer Führungsrippe eines Kanalunterteils kooperierenden Stützschenkel am Kopfende der Grundplatte besteht, wobei am Fußende der Grundplatte wenigstens eine Kontaktleiste ausgebildet ist, welche wenigstens einen zur Kanalaußenseite seitlich angewinkelten Kontaktarm aufweist, an dessen Unterseite eine Schneidkante ausgebildet ist.

Eine weitere Möglichkeit der stirnseitigen Montage von einzelnen Kabelkanalelementen besteht darin, dass bereits bei der Herstellung der einzelnen Kabelkanalelemente ein entsprechendes Kupplungselement mit angeformt wird.
Dies hätte zwar den Vorteil, dass keine separaten Bauteile erforderlich sind, jedoch weist diese Möglichkeit den entscheidenden Nachteil auf, dass durch die angeformten Kupplungselemente die einzelnen Kabelkanalelemente länger werden, wodurch sich Nachteile bei Transport, Lagerhaltung, Verpackung ergeben und es müssen kostenaufwändig einzelne Fixlängen mit diesen Kupplungselementen hergestellt und kostenintensiv gelagert werden.
Hier setzt die Erfindung ein, die sich die Aufgabe gestellt hat, ein Kabelkanalsystem aufzuzeigen, welches die Nachteile des Standes der Technik überwindet, welches kostengünstig und wirtschaftlich herstellbar ist, bei dem einzelne Kabelkanalelemente schnell, sicher sowie kostengünstig stirnseitig montierbar sind und das eine verbesserte Montagefreundlichkeit aufweist.
Erfindungsgemäß wird diese Aufgabe durch die Merkmale des Anspruches 1 gelöst. Weitere vorteilhafte Ausgestaltungen sind in den Unteransprüchen beschrieben.

Es hat sich überraschend herausgestellt, dass durch ein Kabelkanalsystem gemäß Anspruch 1 eine stirnseitige Montage einzelner Kabelkanalelemente jederzeit problemlos möglich ist, sodass das zeit- und kostenaufwändige Nacharbeiten an Kupplungselementen, an Kabelkanalelementen und dergleichen nicht erforderlich ist.
Das erfindungsgemäße Kabelkanalsystem ist weiterhin so ausgebildet, dass im Auslieferungszustand das Kupplungselement bereits an den freien Endbereichen der Kabelkanalelemente eingesetzt ist, so dass eine praxisgerechte Montage auf der Baustelle jederzeit möglich ist und die Kupplungselemente während Transport sowie der Montage unverlierbar angeordnet, die stirnseitige Montage problemlos ermöglichen, ohne dass Versatz oder Spalten entstehen.
Das erfindungsgemäße Kabelkanalsystem ist vorteilhafterweise so ausgebildet, dass das erste Federelement einstückig über den Steg mit dem zweiten Federelement verbunden ist. Hierdurch wird neben der einfachen und kostengünstigen Herstellung des Kupplungselementes auch sichergestellt, dass das Kupplungselement in seiner Montageposition am Endbereich des Kabelkanalelementes auch bei komplizierter Montage bzw. größerer Krafteinwirkung verschiebesicher angeordnet ist.

Ein weiterer Vorteil des erfindungsgemäßen Kabelkanalsystems besteht darin, dass das erste Federelement kraftschlüssig und/oder formschlüssig über den Steg mit dem zweiten Federelement verbunden ist. In dieser vorteilhaften Ausführungsform ist es beispielsweise möglich, dass das erste Federelement und/oder das zweite Federelement wechselbar am Kupplungselement angeordnet und so bei einer Beschädigung leichter auswechselbar ist.

In einer weiteren vorteilhaften Ausführungsform des erfindungsgemäßen Kabelkanalsystems ist der Steg des ersten Federsystems beabstandet vom Steg des zweiten Federsystems angeordnet. Durch diese vorteilhafte Ausgestaltung sind die Kupplungselemente so flexibel, dass sie an allen Seitenwänden der Kabelkanalelemente einschiebbar bzw. arretierbar sind und über beide Schmalseiten an den Seitenwänden der Kabelkanalelemente problemlos anbringbar sind.

Das erfindungsgemäße Kabelkanalsystem ist vorteilhafterweise weiterhin so ausgebildet, dass an der der Öffnung des Kupplungselementes gegenüberliegenden Seite der Federsysteme wenigstens eine zu dieser etwa parallel verlaufende Öffnung angeordnet ist. Diese Öffnung gewährleistet eine ausreichende Flexibilität der das Federsystem bildenden ersten Federelemente sowie der zweiten Federelemente, wobei diese durch insbesondere die Länge der Öffnung parallel zum zweiten Federelement dimensionierbar ist.
Weiterhin positiv beim erfindungsgemäßen Kabelkanalsystem wird gesehen, dass das Kupplungselement wenigstens ein von seiner Oberfläche wegragendes Positionierelement aufweist. Dieses Positionierelement kann vorteilhafterweise so ausgebildet sein, dass es den Spalt zwischen der Oberfläche des Kupplungselementes und der Seitenwand des Kabelkanalelementes überbrückt und das Kupplungselement somit abstützt, da das Positionierelement in etwa die gleiche Länge aufweist wie der Steg des Federsystems. Es liegt jedoch auch im Rahmen der Erfindung, dass das Positionierelement so ausgebildet ist, dass es die Höhe der ersten Führungselemente des Kupplungselementes aufweist.

Ein weiterer Vorteil des erfindungsgemäßen Kabelkanalsystems wird darin gesehen, dass das Kupplungselement wenigstens ein von seiner Oberfläche wegragendes Rastelement aufweist. Dieses Rastelement, welches in den Zwischenraum zwischen dem Kupplungselement und der inneren Seitenwand des Kabelkanalelementes hineinragt, dient zur Aufnahme zusätzlicher Versteifungselemente bzw. Kontaktelemente, welche die Funktion des erfindungsgemäßen Kabelkanalsystems weiter optimieren.

Das erfindungsgemäße Kabelkanalsystem ist weiterhin so ausgebildet, dass das erste Federelement des Federsystems an seinem dem Steg gegenüberliegenden freien Ende wenigstens eine orthogonal zum Steg ausgebildete Fläche aufweist. Durch diese vorteilhafte Ausgestaltung lässt sich das Kupplungselement einfach sowie schnell an den Seitenwänden der Kabelkanalelemente anbringen und vom Auslieferungszustand, in dem das Kupplungselement nicht über die Stirnseite der Kabelkanalelemente herausragt, in den Montagezustand, bei dem das Kupplungselement etwa hälftig über die Stirnseiten der Kabelkanalelemente herausragt, leicht verschieben und sicher positionieren. Eine Falschmontage des Kupplungselementes am Kabelkanalelement ist somit faktisch nicht möglich.

Dabei hat es sich weiterhin als vorteilhaft herausgestellt, dass die freie Länge des ersten Federelementes in etwa der freien Länge des zweiten Federelementes entspricht. Hierdurch sind die Kupplungselemente des erfindungsgemäßen Kabelkanalsystems beidseitig flexibel an allen Stirnseiten der Kabelkanalelemente einfach montierbar bzw. demontierbar.

Ebenfalls vorteilhaft beim erfindungsgemäßen Kabelkanalsystem ist, dass das erste Federelement des ersten Federsystems in etwa parallel versetzt gegenüberliegend dem ersten Federelement des zweiten Federsystems angeordnet ist. Dies führt vorteilhafterweise dazu, dass die Kupplungselemente des erfindungsgemäßen Kabelkanalsystems sowohl an den linken als auch an den rechten Stirnseiten der Kabelkanalelemente problemlos einbringbar sind, ohne dass Rücksicht auf linke bzw. rechte Kupplungselemente und damit eine Erhöhung des Montageaufwandes erforderlich wäre.

Es ist weiterhin so, dass das Kupplungselement wenigstens ein in etwa parallel zu den Federsystemen angeordnetes erstes Führungssystem aufweist. Dieses erste Führungssystem erleichtert die Positionierung des an der Seitenwand des Kabelkanalelementes anzubringenden Kupplungselementes, insbesondere durch eine leichte Einführschräge, so dass das Kupplungselement schnell und einfach an den Seitenwänden der Kabelkanalelemente anordenbar bzw. verschiebbar ist.
Eine ebenfalls vorteilhafte Ausgestaltung des erfindungsgemäßen Kabelkanalsystems besteht darin, dass das Kupplungselement wenigstens ein von seiner Oberfläche wegragendes in etwa orthogonal zu der die Federsysteme beabstandenden Öffnung angeordnetes zweites Führungselement aufweist. Dieses dient einerseits der Erhöhung der Stabilität der Kupplungselemente und andererseits verbessert dieses zweite Führungselement die Handhabbarkeit beim Einschieben bzw. beim Herausziehen der Kupplungselemente an den Seitenwänden der Kabelkanalelemente.

Das erfindungsgemäße Kabelkanalsystem ist weiterhin vorteilhafterweise so ausgebildet, dass das Kupplungselement im Montagezustand über wenigstens einen Steg des Federsystems an der Stirnseite der Seitenwand des Kabelkanalelementes anliegt. Hierdurch wird beim erfindungsgemäßen Kabelkanalsystem sichergestellt, dass das Kupplungselement verschiebesicher arretiert für die stirnseitige Montage eines weiteren Kabelkanalelementes positioniert ist.
Dabei ist das erfindungsgemäße Kabelkanalsystem noch so ausgebildet, dass im Montagezustand die Fläche des Federsystems in etwa bündig an der Außenseite der Seitenwand des Kabelkanalelementes anliegt. Hierdurch ist es möglich, beim erfindungsgemäßen Kabelkanalsystem insbesondere bei der Montage unterhalb von Decken bzw. oberhalb von Böden, bei denen sowohl die Seitenwand als auch die Bodenwand wandseitig anliegt, ein weiteres Kabelkanalelement einfach zu montieren.
Soll nun an ein bereits montiertes Kabelkanalelement, ein weiteres stirnseitig montiert werden, wird dieses über die beiden aus dem montierten Kabelkanalelement herausragenden Kupplungselemente aufgeschoben und soweit in Achsrichtung auf die Kupplungselemente verschoben, bis die Stirnseiten der einander gegenüberliegenden Kabelkanalelemente sich berühren.

In diesem montierten Zustand liegt die Fläche des Federsystems des Kupplungselementes nicht mehr an der Außenseite der Seitenwand des bereits montierten Kabelkanalelementes an, sondern direkt an der Innenseite des zusätzlich montierten Kabelkanalelementes.
In dieser vorteilhaften Ausgestaltung pressen die Federsysteme des Kupplungselementes die montierenden Kabelkanalelemente fest zusammen, so dass das zweite zu montierende Kabelkanalelement durch eine Person an der Wand, Decke und dergleichen problemlos fixierbar ist.

In einer weiteren vorteilhaften Ausführungsform des erfindungsgemäßen Kabelkanalsystems sind die Federsysteme in etwa parallel zur Mittellinie des Kupplungselementes zentrisch zu dieser angeordnet. Dies reduziert die Herstellungskosten der Kupplungselemente und erhöht die Montagefreundlichkeit sowie die Verschiebbarkeit erheblich.

Die Erfindung soll nun an Ausführungsbeispielen, die diese nicht einschränken sollen, näher beschrieben werden.

Es zeigen:
- Fig. 1: perspektivische Darstellung eines Ausschnittes eines erfindungsgemäßen Kabelkanalsystems
- Fig. 2: perspektivische Darstellung eines Kupplungselementes des erfindungsgemäßen Kabelkanalsystems
- Fig. 3: perspektivische Darstellung eines alternativen Kupplungselementes des erfindungsgemäßen Kabelkanalsystems.

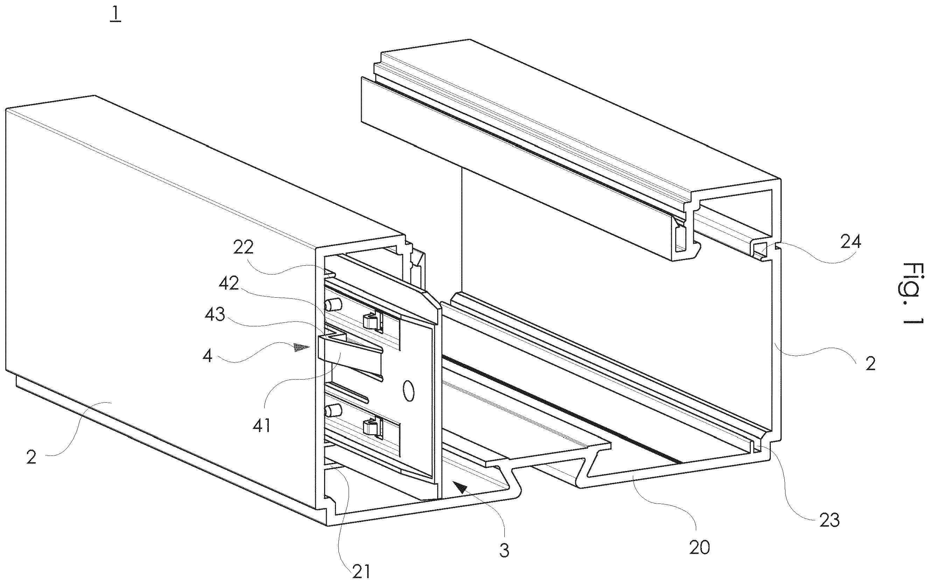

In der Fig. 1 ist eine perspektivische Darstellung eines Ausschnittes des erfindungsgemäßen Kabelkanalsystems dargestellt. Das Kabelkanalsystem umfasst ein Kabelkanalelement 1, welches mittels wenigstens einem Kupplungselement 3 in seiner Längsrichtung mit einem weiteren, hier nicht dargestellten, Kabelkanalelement 1 aneinander fügbar ist, wobei die Kabelkanalelemente 1 aus einem etwa U-förmigen Kanalunterteil sowie insbesondere einer daran anordenbaren und hier nicht dargestellten Abdeckung bestehen, wobei das Kupplungselement 3 lösbar und / oder verschiebbar in den freien Endbereichen der Kabelkanalelemente 1 einsetzbar ist, wobei das an den Endbereichen der Kabelkanalelemente 1 an mindestens einer der Seitenwand 2 geführte Kupplungselement 3 wenigstens zwei Federsysteme 4, 5 aufweist.
Das hier dargestellte Federsystem 4 weist ein erstes Federelement 41 auf, das in etwa einem spitzen Winkel zu einem zweiten Federelement 42 über wenigstens einen Steg 43 beabstandet, miteinander verbunden ist.
Das Kabelkanalelement 1 weist an seiner Seitenwand 2 die Führungsschienen 21, 22, 24 sowie an der Bodenwand 20 die Führungsschiene 23 auf.
Die Führungsschienen 21, 22, 23, 24 des Kabelkanalelementes 1 dienen dazu, dass das Kupplungselement 3 in diesen einführbar und so längsverschieblich an der Seitenwand 2 des Kabelkanalelementes 1 anordenbar ist.
Das Kupplungselement 3 des erfindungsgemäßen Kabelkanalsystems ist dabei so ausgebildet, dass es sowohl in den Führungsschienen 21, 22 der einen Seitenwand 2 als auch in der Führungsschiene 24 der gegenüberliegenden Seitenwand 2 sowie der der Führungsschiene 23 der Bodenwand 20 einführbar bzw. verschiebbar ist.

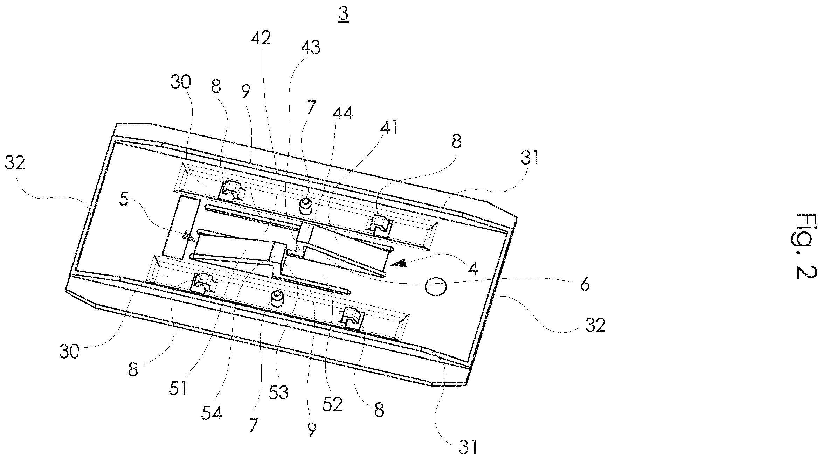

In der Fig. 2 ist eine perspektivische Darstellung des Kupplungselementes 3 des erfindungsgemäßen Kabelkanalsystems 1 dargestellt.
Das Kupplungselement 3 weist in diesem Ausführungsbeispiel zwei Federsysteme 4, 5 auf, die etwa parallel über die Öffnung 6 voneinander beabstandet angeordnet sind.
Dabei ist ein erstes Federelement 41, 51 in etwa einem spitzen Winkel zu einem zweiten Federelement 42, 52 über wenigstens einen Steg 43, 53 beabstandet, miteinander verbunden. In diesem Ausführungsbeispiel ist das erste Federelement 41, 51 einstückig über den Steg 43, 53 mit dem zweiten Federelement 42, 52 verbunden.
Der Steg 43, 53 ist dabei etwa orthogonal zum zweiten Federelement 42, 52 angeordnet. Der Steg 43 des ersten Federsystems 4 ist beabstandet vom Steg 53 des zweiten Führungssystems 5 angeordnet.
An der der Öffnung 6 des Kupplungselementes 3 gegenüberliegenden Seite der Federsysteme 4, 5 ist wenigstens eine zu dieser etwa parallel verlaufende Öffnung 9 angeordnet. Die Öffnung 9 verläuft in etwa parallel zum ersten Federsystem 4 bzw. zum zweiten Federsystem 5. In diesem Ausführungsbeispiel ist die Öffnung 9 so ausgebildet, dass sie in etwa die gleiche Längenausdehnung wie das erste Federelement 41, 51 sowie das zweite Federelement 42 aufweist und dass sie eine geringere Längenausdehnung aufweist als das zweite Federelement 52. Durch diese Ausgestaltung ist es möglich, die Federkraft der Federsysteme 4, 5 so zu dimensionieren, dass das Kupplungselement 3 an der Seitenwand 2 der Kabelkanalelemente 1 leicht verschiebbar, aber sicher fixierbar ist.

Das Kupplungselement 3 weist weiterhin in diesem Ausführungsbeispiel zwei von seiner Oberfläche wegragende Positionierelemente 7 auf. Die Positionierelemente 7 sind in diesem Ausführungsbeispiel im Querschnitt etwa kreisförmig als Dome bzw. Zapfen ausgebildet und weisen in etwa die gleiche Länge auf wie der Steg 43, 53 des Federsystems 4, 5.

Das erste Federelement 41, 51 des Federsystems 4, 5 weist an seinem dem Steg 43, 53 gegenüberliegenden freien Ende wenigstens eine orthogonal zum Steg 43, 53 ausgebildete Fläche 44, 54 auf. Diese Fläche 44, 54 des Federsystems 4, 5 führt einerseits zu einer leichten Verschiebbarkeit des Kupplungselementes 3 an der Seitenwand 2 des Kabelkanalelementes 1 und liegt im Montagezustand, wie er in der Fig. 1 dargestellt ist, an der Stirnseite der Seitenwand 2 des Kabelkanalelementes 1 so an, dass es etwa bündig mit der Außenseite der Seitenwand 2 des Kabelkanalelementes 1 abschließt.

In diesem Ausführungsbeispiel ist die freie Länge des ersten Federelementes 41, 51 in etwa gleich zu der freien Länge des zweiten Federelementes 42, 52 des Federsystems 4, 5 ausgebildet. Es liegt jedoch auch im Rahmen der Erfindung, dass die freie Länge des ersten Federelementes 41, 51 unterschiedlich zur freien Länge des zweiten Federelementes 42, 52 des Federsystems 4, 5 ausgebildet ist.

Ein weiterer Vorteil dieser Ausführungsform des Kupplungselementes 3 besteht darin, dass das erste Federelement 41 des ersten Federsystems 4 in etwa parallel versetzt gegenüberliegend zum ersten Federelement 51 des zweiten Federsystems 5 angeordnet ist.
Dies führt vorteilhafterweise dazu, dass insbesondere im Montagezustand, wie er in der Fig. 1 dargestellt ist, das Kupplungselement 3 über das erste Federsystem 4 an der Stirnseite der Seitenwand 2 des Kabelkanalelementes 1 unverschiebbar positioniert und über das zweite Federsystem 5 an der Seitenwand 2 des Kabelkanalelementes 1 fixiert ist.

Das Kupplungselement 3 weist weiterhin wenigstens ein in etwa parallel zu den Federsystemen 4, 5 angeordnetes erstes Führungssystem 31 auf. Das erste Führungssystem 31 des Kupplungselementes 3 dient dazu, dass das Kupplungselement 3 in den Führungsschienen 21, 22, 23, 24 des Kabelkanalelementes 1 leicht verschiebbar anordenbar ist.

Weiterhin weist das Kupplungselement 3 wenigstens ein von seiner Oberfläche wegragendes, in etwa orthogonal zur Öffnung 6 angeordnetes zweites Führungselement 32 auf.

Das zweite Führungselement 32 führt einerseits zu einer weiteren mechanischen Stabilisierung des Kupplungselementes 3 und dient weiterhin dazu, dass das Kupplungselement 3 durch Betätigen des zweiten Führungselementes 32 an der Seitenwand 2 des Kabelkanalelementes 1 verschiebbar ist. Das zweite Führungselement 32 weist in diesem Ausführungsbeispiel eine geringere Höhe auf als das erste Führungselement 31, wobei das erste Führungselement 31 und das zweite Führungselement 32 in diesem Ausführungsbeispiel auf der Oberfläche des Kupplungselementes 3 einstückig miteinander verbunden sind.

Das Kupplungselement 3 ist weiterhin so ausgebildet, dass es zwei in etwa parallel zu dem Federsystem 4,5 ausgebildete Vertiefungen 30 aufweist. Diese Vertiefungen 30 sind etwa parallel zwischen dem Federsystem 4, 5 und dem ersten Führungselement 31 angeordnet. In der Vertiefung 30 des Kupplungselementes 3 sind neben dem Positionierelement 7 auch Rastelemente 8 angeordnet. Die Rastelemente 8 des Kupplungselementes 3 dienen dazu, weitere zusätzliche Verbindungselemente bzw. Kontaktelemente am Kupplungselement 3 rastend zu fixieren.

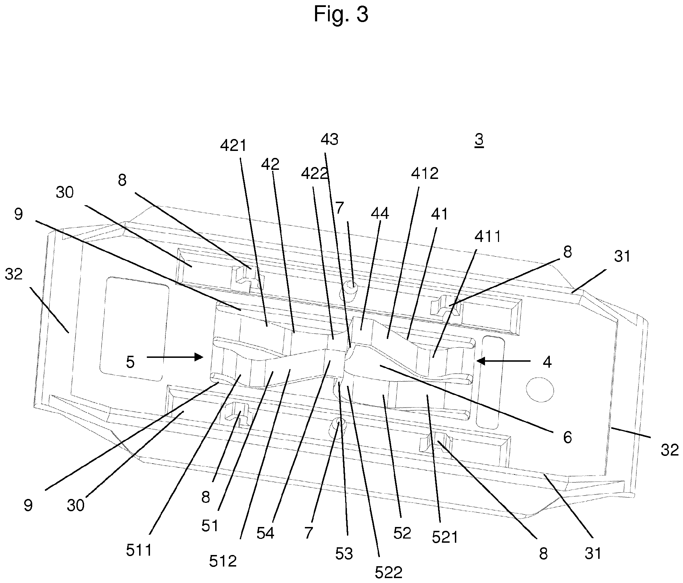

In der Fig. 3 ist eine perspektivische Darstellung des Kupplungselementes 3 des Kabelkanalsystems 1 gemäß einer weiteren Ausführungsform der vorliegenden Erfindung gezeigt. Gleiche Bezugszeichen beziehen sich dabei auf die gleichen Elemente. Hierzu wird auf die entsprechenden Ausführungen in Bezug auf die Fig. 1 und 2 verwiesen. Es soll hier vornehmlich auf die Unterschiede zwischen den Kupplungselementen 3 eingegangen werden.

Das Kupplungselement 3 gemäß der in Fig. 3 gezeigten Ausführungsform der vorliegenden Erfindung weist wiederum zwei Federsysteme 4, 5 auf, die etwa parallel über die Öffnung 6 voneinander beabstandet angeordnet sind. Die beiden ersten Federelemente 41, 51 sind auch hier jeweils in etwa einem spitzen Winkel zu dem betreffenden zweiten Federelement 42, 52 über wenigstens einen Steg 43, 53 beabstandet miteinander verbunden, wobei das erste Federelement 41, 51 jeweils einstückig über den Steg 43, 53 mit dem zweiten Federelement 42, 52 verbunden ist.

Die ersten Federelemente 41, 51 umfassen jeweils Anbindungsabschnitt 411, 511, der in der dargestellten Ausführungsform gekrümmt ausgebildet ist, und einen geraden Abschnitt 412, 512. Der Steg 43, 53 ist dabei jeweils über die Fläche 44, 54 mit dem geraden Abschnitt 412, 512 des jeweiligen ersten Federelements 41, 51.

Das zweite Federelement 42, 52 umfasst jeweils Anbindungsabschnitt 421, 521 und gekrümmten Abschnitt 422, 522. Der Steg 43, 53 ist dabei jeweils über den gekrümmten Abschnitt 422, 522 mit dem zweiten Federelement 42, 52 des jeweiligen Federsystems 4, 5 verbunden. Der Steg 43 des ersten Federsystems 4 ist beabstandet vom Steg 53 des zweiten Federsystems 5 angeordnet.
Das erfindungsgemäße Kabelkanalsystem umfassend Kabelkanalelemente 1, welche mittels wenigstens einem Kupplungselement 3 einfach und kostengünstig sowie schnell in ihrer Längsrichtung aneinander fügbar sind, führt somit zu einer schnelleren und kostengünstigeren Montage als bisher aus dem Stand der Technik bekannt.

## Patentansprüche

1. Kabelkanalsystem umfassend Kabelkanalelemente (1), die Führungsschienen (21, 22, 23, 24) aufweisen, und wenigstens ein Kupplungselement (3), wobei die Kabelkanalelemente (1) mittels wenigstens einem Kupplungselement (3) in ihrer Längsrichtung aneinander fügbar sind und die Kabelkanalelemente (1) aus einem etwa U-förmigen Kanalunterteil, sowie insbesondere einer daran anordenbaren Abdeckung bestehen, wobei das Kupplungselement (3) lösbar und/oder verschiebbar in die freien Endbereiche der Kabelkanalelemente (1) einsetzbar ist, wobei das an den
Endbereichen eines der Kabelkanalelemente (1) an mindestens einer der Seitenwand (2) geführte Kupplungselement (3) wenigstens zwei Federsysteme (4, 5) aufweist, wobei die Federsysteme (4, 5) etwa parallel über eine Öffnung (6) voneinander beabstandet angeordnet sind, wobei jedes Federsystem (4, 5) sich entlang einer
Längsrichtung des plattenförmigen Kupplungselements (3) erstreckt und ein erstes Federelement (41, 51) sowie ein zweites Federelement (42, 52) umfasst, wobei das erste Federelement (41, 51) sich in einem spitzen Winkel zum zweiten Federelement (42, 52) erstreckt und das zweite Federelement (42, 52) in der Längsrichtung vom ersten Federelement (41, 51) beabstandet ist, wobei das erste Federelement (41, 51) nur an seinem ersten Ende am Kupplungselement (3) befestigt ist und an seinem zweiten Ende über wenigstens einen Steg (43, 53), der etwa orthogonal zum zweiten Federelement (42, 52) angeordnet ist, beabstandet mit einem ersten Ende des zweiten Federelements (42, 52) verbunden ist und wobei nur das zweite Ende des zweiten Federelements (42, 52) am Kupplungselement (3) befestigt ist, wobei der Steg (43) des ersten Federsystems (4) beabstandet vom Steg (53) des zweiten Federsystems (5) angeordnet ist, wobei das Kupplungselement (3) wenigstens ein in etwa parallel zu den Federsystemen (4, 5) angeordnetes erstes Führungssystem (31) aufweist, das dazu dient, dass das Kupplungselement (3) in den
Führungsschienen (21, 22, 23, 24) eines der Kabelkanalelemente (1) in einer Ebene parallel zur Seitenwand (2) leicht verschiebbar anordenbar ist, und das Kupplungselement (3) im Montagezustand über das erste Federsystem (4) an der Stirnseite der Seitenwand (2) eines der Kabelkanalelemente (1) unverschiebbar positioniert und über das zweite Federsystem (5) an der Seitenwand (2) dieses Kabelkanalelementes (1) fixiert ist.

2. Kabelkanalsystem nach Anspruch 1, **dadurch gekennzeichnet, dass** das erste Federelement (41, 51) einstückig über den Steg (43, 53) mit dem zweiten Federelement (42, 52) verbunden ist.

3. Kabelkanalsystem nach Anspruch 1, **dadurch gekennzeichnet, dass** das erste Federelement (41, 51) kraftschlüssig und/oder formschlüssig über den Steg (43, 53) mit dem zweiten Federelement (42, 52) verbunden ist.

4. Kabelkanalsystem nach wenigstens einem der vorhergehenden Ansprüche, **dadurch gekennzeichnet, dass** der Steg (43) des ersten Federsystems (4) beabstandet vom Steg (53) des zweiten Federsystems (5) angeordnet ist.

5. Kabelkanalsystem nach mindestens einem der vorhergehenden Ansprüche, **dadurch gekennzeichnet, dass** das erste Federelement (41, 51) des Federsystems (4, 5) an seinem dem Steg (43, 53) gegenüberliegenden freien Ende wenigstens eine orthogonal zum Steg (43, 53) ausgebildete Fläche (44, 54) aufweist.

6. Kabelkanalsystem nach mindestens einem der vorhergehenden Ansprüche, **dadurch gekennzeichnet, dass** die freie Länge des ersten Federelements (41, 51) in etwa der freien Länge des zweiten Federelements (42, 52) entspricht.

7. Kabelkanalsystem nach mindestens einem der vorhergehenden Ansprüche, **dadurch gekennzeichnet, dass** das Kupplungselement (3) im Montagezustand über wenigstens einen Steg (43, 53) des Federsystems (4, 5) an der Stirnseite der Seitenwand (2) des Kabelkanalelements (1) anliegt.

8. Kabelkanalsystem nach Anspruch 5, **dadurch gekennzeichnet, dass** im Montagezustand die Fläche (44, 54) des Federsystems (4, 5) in etwa bündig an der Außenseite der Seitenwand (2) des Kabelkanalelements (1) anliegt.

## Claims

1. A cable duct system comprising cable duct elements (1) having guide tracks (21, 22, 23, 24) and at least one coupling element (3), wherein the cable duct elements (1) can be joined together in their longitudinal direction by means of at least one coupling element (3) and the cable duct elements (1) consist of an approximately U-shaped duct lower part, and in particular a cover that can be arranged thereon, wherein the coupling element (3) can be inserted into the free end regions of the cable duct elements (1) in a releasable and/or slidable manner, wherein the coupling element (3) that is guided on at least one of the side wall (2) at the end regions of one of the cable duct elements (1) comprises at least two spring systems (4, 5), wherein the spring systems (4, 5) are arranged approximately parallel and spaced apart from each other via an aperture (6), wherein each spring system (4, 5) extends along a longitudinal direction of the plate-shaped coupling element (3) and comprises a first spring element (41, 51) and a second spring element (42, 52), wherein the first spring element (41, 51) extends at an acute angle to the second spring element (42, 52) and the second spring element (42, 52) is spaced apart from the first spring element (41, 51) in the longitudinal direction, wherein the first spring element (41, 51) is affixed to the coupling element (3) only at its first end, and at its second end is connected to a first end of the second spring element (42, 52) and spaced apart therefrom via at least one web (43, 53), which is arranged approximately orthogonally to the second spring element (42, 52), and wherein only the second end of the second spring element (42, 52) is affixed on the coupling element (3), wherein the web (43) of the first spring system (4) is arranged such that it is spaced apart from the web (53) of the second spring system (5), wherein the coupling element (3) has at least a first guiding system (31) arranged approximately parallel to the spring systems (4, 5), which ensures that the coupling element (3) can be arranged such that it can be readily slid in the guide tracks (21, 22, 23, 24) of one of the cable duct elements (1) in a plane parallel to the side wall (2), and in the assembled state the coupling element (3) is positioned in a non-slidable manner at the end face of the side wall (2) of one of the cable duct elements (1) via the first spring system (4) and is fixed on the side wall (2) of this cable duct element (1) via the second spring system (5).

2. The cable duct system according to claim 1, **characterised in that** the first spring element (41, 51) is integrally connected to the second spring element (42, 52) via the web (43, 53).

3. The cable duct system according to claim 1, **characterised in that** the first spring element (41, 51) is connected to the second spring element (42, 52) in a positive and/or non-positive manner via the web (43, 53).

4. The cable duct system according to at least one of the preceding claims, **characterised in that** the web (43) of the first spring system (4) is arranged such that it is spaced apart from the web (53) of the second spring system (5).

5. The cable duct system according to at least one of the preceding claims, **characterised in that** the first spring element (41, 51) of the spring system (4, 5) has, at its free end opposite the web (43, 53), at least one surface (44, 54) configured orthogonally to the web (43, 53).

6. The cable duct system according to at least one of the preceding claims, **characterised in that** the free length of the first spring element (41, 51) approximately corresponds to the free length of the second spring element (42, 52).

7. The cable duct system according to at least one of the preceding claims, **characterised in that** in the assembled state, the coupling element (3) abuts against the end face of the side wall (2) of the cable duct element (1) via at least one web (43, 53) of the spring system (4, 5).

8. The cable duct system according to claim 5, **characterised in that** in the assembled state, the surface (44, 54) of the spring system (4, 5) is approximately flush with the outside of the side wall (2) of the cable duct element (1).

## Revendications

1. Système de goulotte pour câbles comprenant des éléments de goulotte pour câbles (1), qui présentent des rails de guidage (21, 22, 23, 24), et au moins un élément de couplage (3), dans lequel les éléments de goulotte pour câbles (1) peuvent être assemblés les uns au niveau des autres dans leur sens longitudinal au moyen d'au moins un élément de couplage (3) et les éléments de goulotte pour câbles (1) sont constitués d'une partie inférieure de goulotte à peu près en forme de U ainsi qu'en particulier d'un recouvrement pouvant être disposé au niveau de celle-ci, dans lequel l'élément de couplage (3) peut être inséré de manière amovible et/ou de manière à pouvoir coulisser dans les zones d'extrémité libres des éléments de goulotte pour câbles (1), dans lequel l'élément de couplage (3) guidé au niveau des zones d'extrémité d'un des éléments de goulotte pour câbles (1) au niveau d'au moins une paroi latérale (2) présente au moins deux systèmes de ressort (4, 5), dans lequel les systèmes de ressort (4, 5) sont disposés à distance les uns des autres à peu près de manière parallèle au-dessus d'une ouverture (6), dans lequel chaque système de ressorts (4, 5) s'étend le long d'un sens longitudinal de l'élément de couplage (3) en forme de plaque et comprend un premier élément de ressort (41, 51) ainsi qu'un deuxième élément de ressort (42 52), dans lequel le premier élément de ressort (41, 51) s'étend selon un angle aigu par rapport au deuxième élément de ressort (42, 52) et le deuxième élément de ressort (42, 52) est tenu à distance dans le sens longitudinal du premier élément de ressort (41, 51), dans lequel le premier élément de ressort (41, 51) est fixé seulement au niveau de sa première extrémité au niveau de l'élément de couplage (3) et est relié au niveau de sa seconde extrémité par l'intermédiaire d'au moins une entretoise (43, 53), qui est disposée à peu près de manière orthogonale par rapport au deuxième élément de ressort (42, 52), à distance à une première extrémité du deuxième élément de ressort (42, 52) et dans lequel seulement la seconde extrémité du deuxième élément de ressort (42, 52) est fixée au niveau de l'élément de couplage (3), dans lequel l'entretoise (43) du premier système de ressorts (4) est disposée à distance de l'entretoise (53) du deuxième système de ressorts (5), dans lequel l'élément de couplage (3) présente au moins un premier système de guidage (31) disposé à peu près de manière parallèle par rapport aux systèmes de ressorts (4, 5), qui sert à ce que l'élément de couplage (3) puisse être disposé de manière à pouvoir coulisser légèrement dans les rails de guidage (21, 22, 23, 24) d'un des éléments de goulotte pour câbles (1) dans un plan de manière parallèle par rapport à la paroi latérale (2), et l'élément de couplage (3) est positionné de manière à ne pas pouvoir coulisser dans l'état de montage par l'intermédiaire du premier système de ressorts (4) au niveau du côté frontal de la paroi latérale (2) d'un des éléments de goulotte pour câbles (1) et est bloqué par l'intermédiaire du deuxième système de ressorts (5) au niveau de la paroi latérale (2) dudit élément de goulotte pour câbles (1).

2. Système de goulotte pour câbles selon la revendication 1, **caractérisé en ce que** le premier élément de ressort (41, 51) est relié d'un seul tenant par l'intermédiaire de l'entretoise (43, 53) au deuxième élément de ressort (42, 52).

3. Système de goulotte pour câbles selon la revendication 1, **caractérisé en ce que** le premier élément de ressort (41, 51) est relié à force et/ou par complémentarité de forme par l'intermédiaire de l'entretoise (43, 53) au deuxième élément de ressort (42, 52).

4. Système de goulotte pour câbles selon au moins l'une quelconque des revendications précédentes, **caractérisé en ce que** l'entretoise (43) du premier système de ressorts (4) est disposée à distance de l'entretoise (53) du deuxième système de ressorts (5).

5. Système de goulotte pour câbles selon au moins l'une quelconque des revendications précédentes, **caractérisé en ce que** le premier élément de ressort (41, 51) du système de ressorts (4, 5) présente au niveau de son extrémité libre faisant face à l'entretoise (43, 53) au moins une surface (44, 54) réalisée de manière orthogonale par rapport à l'entretoise (43, 53).

6. Système de goulotte pour câbles selon au moins l'une quelconque des revendications précédentes, **caractérisé en ce que** la longueur libre du premier élément de ressort (41, 51) correspond à peu près à la longueur libre du deuxième élément de ressort (42, 52).

7. Système de goulotte pour câbles selon au moins l'une quelconque des revendications précédentes, **caractérisé en ce que** l'élément de couplage (3) repose dans l'état de montage par l'intermédiaire d'au moins une entretoise (43, 53) du système de ressorts (4, 5) au niveau du côté frontal de la paroi latérale (2) de l'élément de goulotte pour câbles (1).

8. Système de goulotte pour câbles selon la revendication 5, **caractérisé en ce que** dans l'état de montage, la surface (44, 54) du système de ressorts (4, 5) repose à peu près en affleurement au niveau du côté extérieur de la paroi latérale (2) de l'élément de goulotte pour câbles (1).
